Europäisches Patentamt

European Patent Office

Office européen des brevets

(11) Veröffentlichungsnummer: **0 410 133 B1**

# (12) EUROPÄISCHE PATENTSCHRIFT

(45) Veröffentlichungstag der Patentschrift: **02.03.94**

(21) Anmeldenummer: **90111602.0**

(22) Anmeldetag: **20.06.90**

(51) Int. Cl.⁵: **G01L 3/10**, G01L 3/04

(54) Vorrichtung zur Erfassung des in einer Welle übertragenen Drehmomentes, insbesondere bei einer zwischen einem Prüfling und einer Prüfmaschine angeordneten Welle.

(30) Priorität: **24.07.89 EP 89113596**

(43) Veröffentlichungstag der Anmeldung:
**30.01.91 Patentblatt 91/05**

(45) Bekanntmachung des Hinweises auf die Patenterteilung:
**02.03.94 Patentblatt 94/09**

(84) Benannte Vertragsstaaten:
**AT BE CH ES FR GB IT LI NL SE**

(56) Entgegenhaltungen:
**DE-A- 2 549 025**
**DE-A- 3 528 364**

**SIEMENS-ZEITSCHRIFT Band 45, Heft 10, 1971, Seiten 719-723, Erlangen, DE; W. GE-BAUER et al.: "Ein Drehmomentrechner für Pendelmaschinenprüfstände in der Automobilindustrie"**

**TM/TECHNISCHES MESSEN Band 54, Nr. 12, 1987, Seiten 476-479, München, DE; A.M. KREIPP et al.: "PC-gestützte digitale Drehmomentmessung"**

**PUBLIKATION DER FIRMA CIBA-GEIGY, Juli 1981, Basel, CH; C. RÜEGG: "Kohlefaser- und Aramidfaser-Kunststoffe für Kardanwellen"**

(73) Patentinhaber: **Renz, Roland Adam**
**Schuckertstrasse 4**
**D-90765 Fürth(DE)**

(72) Erfinder: **Renz, Roland Adam**
**Schuckertstrasse 4**
**D-90765 Fürth(DE)**

EP 0 410 133 B1

**Beschreibung**

Die Erfindung bezieht sich auf ein Verfahren und eine Vorrichtung zur Erfassung des in einer Welle übertragenen Drehmomentes, insbesondere in einer zwischen einem Prüfling und einer Prüfmaschine angeordneten Welle in einem Prüfstand durch Erfassen elastischer Verformungen der Welle.

Zur Drehmomentistwerterfassung bei Prüfständen sind drei Verfahren bekannt. Das eine Verfahren beruht darauf, die Belastungsmaschine pendelnd aufzuhängen und das Reaktionsmoment zu messen. Die zweite Methode besteht bei elektrischen Maschinen darin, das Drehmoment aus relativ leicht erfaßbaren elektrischen Größen und mechanischen Korrekturgrößen zu berechnen. Die dritte, sehr häufig verwendete Methode ist die Verwendung einer Drehmomentmeßwelle, die im Antriebsstrang eingebaut wird. Wegen der hohen Drehzahl auf Prüfständen können im allgemeinen diese Wellen nicht fliegend im Wellenstrang eingebaut sein und müssen daher im eigenen Stehlager nochmals gelagert werden.

Vor- und Nachteile der einzelnen Meßverfahren sind im einzelnen näher, z. B. in der Siemens-Zeitschrift 1971, Heft 10, S. 720, beschrieben.

Bisherige Lösungen haben immer den Nachteil, daß das übertragene Drehmoment nicht exakt in der Schnittebene eines Zweimassenschwingers gemessen wird. Ferner bildet der mechanische Aufbau bisheriger Prüfstände mit der eingebauten konventionellen Meßwelle immer mindestens ein Dreimassensystem.

Dies führt in aller Regel zu Phasensprüngen (zusätzlicher Freiheitsgrad) und Frequenzanteilen der zweiten Systemeigenfrequenz eines Dreimassenschwingers im Drehmomentmeßwellensignal.

Bei Motorenprüfständen in der Automobilindustrie ist häufig ein größerer Abstand zwischen Prüfling, z. B. einer Verbrennungskraftmaschine und der elektrischen Prüfmaschine notwendig bzw. zweckmäßig; z. B. wegen eines angebauten Auspuffes am Prüfling oder wegen des Abfangens von Schwingungen des gefederten Motors, da lange Verbindungen nur relativ kleine Ausschläge in Verbindungskupplungen hervorrufen. Auf der anderen Seite ist die Verwendung relativ langer Wellen, insbesondere im Hinblick auf Biege- und Drehschwingungen nicht ganz unproblematisch.

Den gegenwärtigen Stand der Drehmomentmeßtechnik beschreibt das Dokument DE-A-3 528 364. Darin werden auf die Oberfläche eines kompakt aufgebauten Torsionsrohres mehrere Dehnungsmeßstreifen (DMS) in der Hauptspannungsrichtung aufgeklebt und miteinander zu einer Wheatstone-Meßbrücke elektrisch verschaltet. Bei Torsionsbelastung erzeugt die DMS-Meßbrücke eine elektrische Diagonalspannung, die dem existierenden Drehmoment proportional ist. Die Wandstärke des Torsionsbereiches dient dabei zur Einstellung der gewünschten Meßempfindlichkeit (Meßbereich) und zum Abgleich der DMS-Meßbrücke.

Die Aufgabe der vorliegenden Erfindung besteht darin, eine Meßvorrichtung der eingangs genannten Art zu schaffen, die robust ist und relativ lange Wellen zuläßt.

Diese Aufgabe wird erfindungsgemäß durch folgende Merkmale gelöst:

a) als Welle dient ein Rohr in Form eines Mehrschichtverbundes aus Faser-Matrix-Kunststoff,

b) auf einem als annähernd eben anzusehenden Flächenelement des Rohres, welches senkrecht zum Rohrradius liegt, werden die relativen Verzerrungen in mindestens drei Richtungen gemessen und

c) aus den relativen Verzerrungen wird durch Verknüpfung mit den zugehörigen Koeffizienten der Steifigkeitsmatrix für die betreffenden Richtungen eine Kraft ermittelt, die unter Berücksichtigung der Rohrlänge und des Bezugsradius des Flächenelementes als Maß für das Drehmoment dient.

Die hier vorgeschlagene Methode zur Messung des übertragenen Drehmomentes im Antriebsstrang hat nicht die eingangs genannten Nachteile, da die Kopplung der elektrischen Maschine mit den Prüfling (z.B. Verbrennungsmotor) mit Hilfe einer einzigen Torsionsfeder (Mehrschicht-Matrix-Verbundwerkstoff) einen mechanisch hinreichend gedämpften Zweimassenschwinger bildet. Die mechanischen Eigenschaften der Torsionsfeder sind in Längsrichtung konstant und das Reaktionsmoment kann dadurch genau in der Schnittebene eines Zweimassenschwingers gemessen werden. Dies hat den wichtigen Vorteil, daß der mechanische Verbund mit guter Genauigkeit als gedämpfter Zweimassenschwinger beschrieben werden kann (gewöhnliche Differentialgleichung zweiter Ordnung). Daraus ergibt sich fernerhin die Möglichkeit, in einem Rechenmodell in Verbindung mit dem gemessenen Wellendrehmoment (Schnittmoment) physikalisch nicht meßbare Systemgrößen zu schätzen. Dies sind oft ein oder mehrere dominante Systemvariablen, die zu Regelungszwecken vorteilhaft ausgenutzt werden können.

Als Mehrschichtverbundwerkstoff kommen vor allem Kohlenfaser- und/oder Aramitfaser-Kunststoffe infrage. Ein Rohr aus derartigem Material ist relativ leicht, verfügt über ein gewisses Dämpfungsvermögen bei Torsion und ist auch bei hohen Eigenfrequenzen stabil. Damit entfallen bei langen Wellen die Zwischenlager. Die Schwierigkeit, die sich daraus ergibt, daß es sich bei den Mehrschichtverbundwerkstoffen um anisotropes (orthotropes) Material handelt, kann dabei dadurch umgangen werden, daß die Dehnungen (Verzerrungen) in drei Richtungen in an sich bekannter Weise mit z.B. Dehnungsmeßstreifen erfaßt werden und aus diesen drei Meßwerten unter Berücksichtigung der Steifigkeitsmatrix des Mehrschichtverbundes eine Membrankraft ermittelt werden kann, die proportional dem Torsionsmoment einer Rohrverbindung eines Mehrschichtverbundes ist. Die genannte Matrix läßt sich unter der Annahme symmetrischer Verhältnisse des Mehrschichtverbundes hinsichtlich der Wicklung und durch Wahl einer annähernd als eben anzusehenden Meßfläche auf eine relativ einfache Form reduzieren, und zwar lautet die Beziehung für das Moment M

$$M \sim (B_{13} \cdot Ex + B_{23} Ey + B_{33} \gamma_{xy})$$

wobei $E_x$, $E_y$ und $\gamma_{xy}$ die relativen Verzerrungen in den einzelnen Richtungen x, y und xy und $B_{13}$, $B_{23}$ und $B_{33}$ die entsprechenden Verbundkenngrößen (Elastizitätsmodule bzw. Steifigkeitsmatrix) darstellen.

Anhand eines in der Zeichnung dargestellten Ausführungsbeispiels ist die Erfindung näher erläutert; es zeigen:

FIG 1 das Prinzipschaltbild der Meßanordnung

FIG 2 die Verhältnisse am Meßort und

FIG 3 den Aufbau einer Welle.

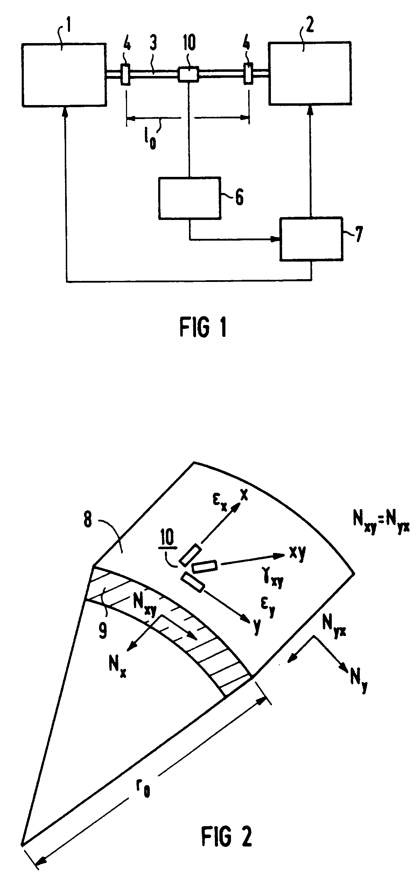

Wie aus FIG 1 ersichtlich, ist zwischen einer Arbeitsmaschine 1 und einer Kraftmaschine 2 eine Drehmomentmeßwelle 3 vorgesehen. Diese Drehmomentwelle 3, die aus einem symmetrischen Mehrschichtverbund aus Faser-Matrix-Kunststoffen in symmetrischer Wicklung besteht, stellt die eigentliche Meßstrecke $1_o$ von z.B. 1,5 m zwischen den beiden Kupplungen 4 dar. Auf dieser Welle 3, die als relativ dünnwandiges, aber gleichzeitig stabiles Rohr von z.B. 120 mm Durchmesser mit definierter Torsionssteifigkeit ausgebildet ist, sind auf der annähernd ebenen Meßfläche 8 in der Rohrwandung 9 in den zwei zueinander senkrechten Richtungen X und Y und in einer unter 45° dazu liegenden Richtung (X, Y) jeweils ein Dehnungsmeßstreifensystem 10 angeordnet, dessen Werte in an sich bekannter Weise über eine rotierende Stelle nach außen zu einer ortsfesten Meßwertverarbeitung 6 übertragen werden können. Von dort aus gelangen diese Werte in einen Rechner 7, der seinerseits wieder Arbeitsmaschine 1 und Kraftmaschine 2 entsprechend regelt. Unter der Annahme, daß der Mehrschichtverbund symmetrisch ist und daß die Krümmungen vernachlässigbar klein seien, ergibt sich folgendes Gleichungssystem des Mehrschichtverbundes:

$$\begin{bmatrix} N_x \\ N_y \\ N_{xy} \end{bmatrix} = \begin{bmatrix} B_{11} & B_{12} & B_{13} \\ B_{12} & B_{22} & B_{23} \\ B_{13} & B_{23} & B_{33} \end{bmatrix} \cdot \begin{bmatrix} E_x \\ E_y \\ \gamma_{xy} \end{bmatrix} \qquad \text{kurz: } \vec{N} = \underset{\sim}{B} \cdot \vec{V}$$

wobei unter $N_x$ eine der Zug-/Druckbelastung in Rohrlängsrichtung (x) proportionale Schnittgröße zu verstehen ist, unter $N_y$ eine Größe, die proportional der Umfangskraft ist und unter $N_{xy}$ eine Torsionskraft, die dem Torsionsmoment $M_T$ unter Berücksichtigung der Rohrgeometrie proportional ist. Im allgemeinen sind die Verbundkenngrößen B der Steifigkeitsmatrix temperaturabhängig. Demzufolge sind die Membrangrößen N im allgemeinen temperaturabhängig, was im speziellen Anwendungsfall zu berücksichtigen ist.

Unter den Werten $E_x$, $E_y$ und $\gamma_{xy}$ sind die Meßgrößen, d.h. die relativen Dehnungen (Verzerrungen) aus den Messungen mit den Dehnungsmeßstreifen in drei Richtungen zu verstehen. Das gesuchte Torsionsmoment $M_T$ ergibt sich also aus folgender Beziehung:

$$M_T = N_{xy} \cdot r_o \cdot \ell_o = (B_{13} E_x + B_{23} E_y + B_{33} \gamma_{xy}) \cdot r_o \cdot \ell_o$$

Wie ersichtlich, werden also nur noch drei Verbundkenngrößen $B_{13}$, $B_{23}$ und $B_{33}$ benötigt.

Unter Verwendung der hier richtungsabhängigen poissonschen Querkontraktionszahlen lassen sich die üblicherweise bekannten, hier ebenfalls richtungsabhängigen, Elastizitätsmodule und Schubmodule angeben. Diese Betrachtungsweise bringt aber bei orthotropen Materialien keine Vereinfachung.

Unter $r_o$ ist der mittlere Bezugsradius der Meßfläche des Mehrschichtverbundes und unter $\ell_o$ die effektive Torsionslänge des Mehrschichtverbundes, d.h. des Rohres zu verstehen.

Zur Berücksichtigung von Zentrifugalbeschleunigungsdehnnung und Biegeauslenkung können dem so errechneten Wellendrehmoment $M_T$ bzw. den zur Bestimmung des Wellendrehmoments benutzten Dehnungen entsprechende Korrekturgrößen zugesetzt werden, um die Messung zu verbessern. Ebenso ist eine Verbesserung der Messung möglich, wenn der Rechenwert mit einem Vergleichswert stationär kalibriert wird.

Nähere Einzelheiten über kohlenstoffaserverstärkte Kunststoffe finden sich beispielsweise im Band 167, "Kontakt und Studium", Dr.-Ing. Günther Niederstadt, Expert-Verlag, oder in einer Publikation der Firma Ciba Geigy zum Thema "Kohlefaser- und Aramitfaserkunststoffe für Kardanwellen" aus dem Jahr 1981.

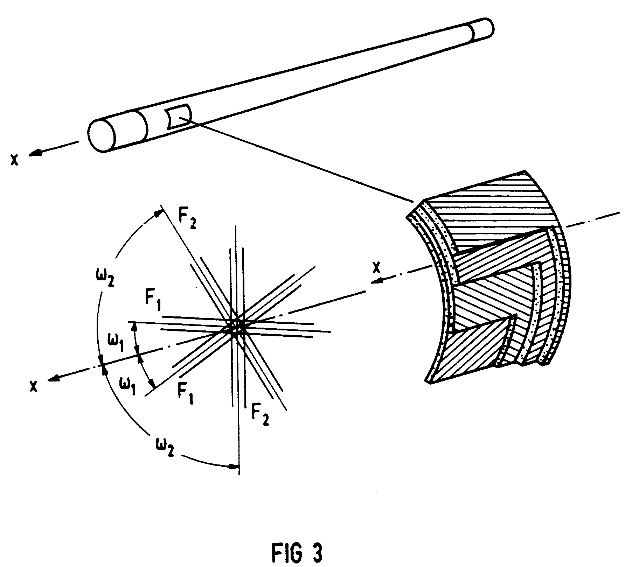

Literatur hinsichtlich der Messung von Dehnungen mit Dehnungsmeßstreifen findet sich z.B. in dem Buch von Karl Hofmann "Eine Einführung in die Technik des Messens mit Dehnungsmeßstreifen", Verlag Hottinger, Baldwin Meßtechnik GmbH, Darmstadt 1987. FIG 3 zeigt die Festlegung der Wickelwinkel zweier Fasern im Torsionskörper aus Faserverbundwerkstoff. Der effektive Wickelwinkel w einer Faser ist dabei bezüglich der Achslängenkoordinate x des Torsionskörpers angegeben. Hierbei ist nach FIG 3 z.B. $w_1$ der Wickelwinkel der Fasersorte F1 und $w_2$ der Wickelwinkel der Fasersorte F2.

Die Meßfläche 8 in der Rohrwandung 9 liegt senkrecht zum Rohrradius $r_o$ und ist als nahezu ebenes Flächenstück anzusehen.

**Patentansprüche**

1. Verfahren zur Erfassung des in einer Welle übertragenen Drehmomentes insbesondere in einer zwischen einem Prüfling und einer Prüfmaschine angeordneten Welle durch Auswerten elastischer Verformungen der Welle, **gekennzeichnet durch** folgende Merkmale:

   a) als Welle dient ein Rohr (3) in Form eines Mehrschichtverbundes aus Faser-Matrix-Kunststoff, das in der Kopplung Prüfmaschine mit Prüfling einen in mechanischer Hinsicht hinreichenden Zweimassenschwinger bildet

   b) auf einem als annährend eben anzusehenden Flächenelement (8) des Rohres (3), welches senkrecht zum Rohrradius liegt, wird die relative Verzerrung in mindestens drei Richtungen gemessen und

   c) aus den relativen Verzerrungen ($E_x$, $E_y$, $\gamma_{xy}$) wird durch Verknüpfung mit den zugehörigen Koeffizienten (B) der Elastizität für die betreffenden Richtungen (X, Y, XY) eine Kraft ($N_{xy}$) ermittelt, die nach Berücksichtigung von Bezugsradius ($r_o$) und Rohrlänge ($\ell_o$) als Maß für das Drehmoment ($M_T$) dient.

2. Verfahren nach Anspruch 1, **dadurch gekennzeichnet**, daß der Rechenwert für das Drehmoment hinsichtlich der drehzahlabhängigen Verformung der Welle (3) korrigiert wird.

3. Verfahren nach Anspruch 1, **gekennzeichnet durch** die Kalibrierung des errechneten Drehmomentwertes mit einem Vergleichswert.

4. Verfahren nach Anspruch 1, **gekennzeichnet durch** die Verwendung von Kohlenstoff und/oder Aramitfaserverstärkten-Kunststoffen, die schichtweise sich überkreuzend zu einem Rohr gewickelt sind.

5. Vorrichtung zur Durchführung des Verfahrens nach Anspruch 1 mit einem Torsionsrohr (3), mit einer Dehnungsmeßstreifenanordnung (10) und mit Mitteln zur Meßwertverarbeitung (6), **dadurch gekennzeichnet**, daß das Rohr (3) als Mehrschichtverbund aus Faser-Matrix-Kunststoff ausgebildet ist und in der Kopplung Prüfmaschine mit Prüfling einen in mechanischer Hinsicht hinreichenden Zweimassenschwinger bildet, daß auf einem als annährend eben anzusehenden Flächenelement (8) des Rohres (3) zur Bestimmung der relativen Verzerrung Dehnungsmeßstreifen (10) in mindestens drei Richtungen angeordnet sind und daß die Meßwertverarbeitung (6) zur Bestimmung des Drehmomentes durch Verknüpfung der Verzerrungen mit den zugehörigen Koeffizienten der Elastizität unter Berücksichtigung des Bezugsradius ($r_o$) und der Rohrlänge ($\ell_o$) ausgebildet ist.

**Claims**

1. *Method* for detection of torque transferred in a shaft, especially between a shaft arranged between a test piece and a testing machine, by evaluting the elastic deformation of the shaft, characterized by the following features:

   a) the shaft consists of a tube (3) in the form of a laminated composition of fiber matrix material, that can be viewed mechanically as a second order oscillating system in the coupling between the test machine and test piece;

b) the relative distortion in at least three directions is measured on an element (8) of the surface of the tube (3), perpendicular to the radius of the tube, which is regarded as being approximately level;

c) a force $(N_{xy})$ is determined by multiplying the relative distortion values $(E_x, E_y, \gamma_{xy})$ by the coefficients (B) of elasticity for the relevant directions (X, Y, XY). Having taken the length of the tube $(l_o)$ and the reference radius $(r_o)$ into account, the force serves as the measure of torque $(M_T)$.

2. **Method** according to claim 1 is characterized by, the correction of the calculated torque value with respect to the speed dependent deformation of the shaft (3).

3. **Method** according to claim 1 is characterized by, the calibration of the calculated torque value with a comparison value.

4. **Method** according to claim 1 is characterized by, the use of carbon and/or Aramite fiber strengthened composite material that is wound in overlapping layers forming a tube.

5. **Device** for processing the method according to claim 1 with a torsion tube (3), with a strain gauge arrangement (10) and with resources for processing measured values (6) is characterized:

a) in that the tube (3) is constructed as a laminated composition of fiber matrix material and forms in the connection between the test machine and test piece a mechanically sufficient second order oscillating system;

b) in that strain gauges (10) are aligned in at least three directions on an element of the surface of the tube (3);

c) and in that the measured value processing (6) for determining the torque in an equation connecting the distortion with the associated coefficients of elasticity with reference to the reference radius $(r_o)$ and the tube length $(l_o)$ is implemented.

**Revendications**

1. **Procédé** pour la détection du couple de rotation transféré dans un arbre, spécialement dans un arbre arrangé entre une pièce à essayer et une machine d'essais à l'aide de l'évaluation des déformations élastiques de l'arbre, dont voici les caractéristiques:

a) l'arbre consiste en un tube (3) sous la forme d'un composite laminé en fibres matrix qui forme dans le couplage entre la machine d'essais et la pièce à essayer un système oscillatoire de deuxième ordre suffisant du point de vue mécanique.

b) la distorsion relative est mesurée au moins dans trois directions sur un élément (8) de la surface du tube (3), perpendiculaire au radius du tube, ce dernier étant considéré comme à peu prés plan.

c) on détermine une force (Nxy) en multipliant les valeurs de distorsion relatives $(E_x, E_y, \gamma_{xy})$ par les coefficients d'élasticité (B) des directions concernées (X, Y, XY). Tenant compte du radius de référence $(r_o)$ et de la longueur du tube $(l_o)$, cette force sert de mesure pour le couple de rotation $(M_T)$.

2. **Procédé,** selon la revendication 1, caractérisé par le fait que la valeur calculée pour le couple de rotation du point de vue de la déformation de l'arbre (3) relative à la vitesse de rotation est corrigée.

3. **Procédé**, selon la revendication 1, caractérisé par le calibrage de la valeur de couple de rotation calculée à l'aide d'une valeur de comparaison.

4. **Procédé**, selon la revendication 1, caractérisé par l'utilisation de carbone et/ou de matiéres artificielles renforcées par des fibres de carbone croisées par couches superposées pour former un tube.

5. **Dispositif** pour l'exécution du procédé selon la revendication 1 avec un tube de torsion (3), une installation de jauges extensométriques (10) et des moyens pour le traitement des valeurs de mesure (6) caractérisé par les faits que:

a) le tube (3) est construit comme un composite laminé en fibres matrix et qu'il forme dans le couplage entre la machine d'essais et la pièce à es sayer un système oscillatoire de deuxième ordre suffisant du point de vue mécanique

b) des jauges extensométriques (10) sont plac es sur la surface du tube (3) considéré comme étant plan pour déterminer la distorsion relative au moins dans trois directions

c) le traitement des valeurs de mesure (6) pour déterminer le couple de torsion dans une équation combinant la distorsion avec les coefficients associés d'élasticité en se référant au radius de référence ($r_o$) et à la longueur du tube ($l_o$) est exécuté.

FIG 1

FIG 2

FIG 3